# EUROPÄISCHE PATENTANMELDUNG

(11) **EP 1 300 922 A1**
(43) Veröffentlichungstag der Anmeldung: **09.04.2003**
(21) Anmeldenummer: 02022049.7
(22) Anmeldetag: 02.10.2002
(51) Int. Cl.: H02K 1/17

(54) **Gleichstrommaschine und Verfahren zum Befestigen von Magneten an einem Polgehäuse einer Gleichstrommaschine**

(30) Priorität: 02.10.2001 DE 10148652
(71) Anmelder: ROBERT BOSCH GMBH, 70442 Stuttgart (DE)
(72) Erfinder: Fuhr, Steffen, 71088 Holzgerlingen (DE)

(57) **Zusammenfassung**

Es wird eine Gleichstrommaschine vorgeschlagen, die ein ringförmiges Polgehäuse (33) aufweist, an dem mehrere Magnete (29) befestigt sind. Die Gleichstrommaschine zeichnet sich durch eine am Polgehäuse (33) befestigbare Magnethaltevorrichtung (1) aus, an der die Magnete (29), insbesondere Permanentmagnete, gehalten sind.

Ferner wird eine Verfahren zum Befestigen von Magneten an einem ringförmigen Polgehäuse einer Gleichstrommaschine vorgeschlagen.

## Beschreibung

Die Erfindung betrifft eine Gleichstrommaschine mit einem ringförmigen Polgehäuse, an dem mehrere Magnete befestigbar sind, gemäß Anspruch 1, und ein Verfahren zum Befestigen von Magneten an einem ringförmigen Polgehäuse einer Gleichstrommaschine, gemäß Anspruch 18.

### Stand der Technik

Gleichstrommaschinen der hier angesprochenen Art sind bekannt. Im Zusammenhang mit Starteranlagen für Fahrzeugmotoren werden sie beispielsweise als fremderregte, insbesondere permanenterregte Gleichstrommotoren eingesetzt. Diese umfassen ein ringförmiges Polgehäuse, an dessen Innenumfang üblicherweise sechs Permanentmagnete in einer 60°-Teilung befestigt werden.

Zur Befestigung der Permanentmagnete ist es bekannt, diese in das Polgehäuse einzukleben, was aus fertigungstechnischer Sicht ungünstig ist. Die eingesetzten Klebstoffe müssen den im Betrieb des Gleichstrommotors auftretenden hohen Temperaturen, die bis zu 250°C betragen können, standhalten. Aufgrund der einseitigen, flächigen und starren Befestigung der Magnete durch die Klebverbindung können sogenannte Schichtabplatzer auftreten, so dass ein sicheres Halten der Magnete nicht mehr gewährleistet ist.

Es ist auch bekannt, am Polgehäuse Haltefedern anzubringen, welche die Magnete in axialer Richtung und in Umfangsrichtung des Polgehäuses sichern. Die Haltefedern werden am Polgehäuse angeschweißt oder mittels einer Klipsverbindung daran befestigt. Die Montage der Magnete mit Haltefedern ist aufwendig und bei der Montage taktzeitbestimmend. Jede Haltefeder wird von einem Coil ausgestanzt, einzeln zugeführt und in einem Werkstückträger positioniert, der zum Halten sämtlicher Magnete und Halterfedern dient. Bei der Montage des gesamten Verbandes muss sichergestellt werden, dass die Haltefedern nicht verdrehen oder abkippen. Werden die Haltefedern mittels einer Klipsverbindung am Polgehäuse befestigt, kann es beim Einpressen der die Magnete haltenden Haltefedern zu einer Verschiebung der magnetischen Mitte kommen. Dies kann auch bei einer starken Schüttelbeanspruchung im eingebauten Zustand beziehungsweise im Betrieb der Gleichstrommaschine auftreten, da die Magnete durch die quasi lose Verbindung mit den Haltefedern axial wandern können und dadurch zueinander axial unterschiedlich positioniert sind.

### Vorteile der Erfindung

Die erfindungsgemäße Gleichstrommaschine mit den in Anspruch 1 genannten Merkmalen bietet demgegenüber den Vorteil, dass durch die am Polgehäuse befestigbare Magnethaltevorrichtung, an der die Magnete gehalten sind, diese axial genau zueinander positioniert werden können, wodurch die magnetische Mitte sehr genau definiert ist. Vorteilhaft ist ferner, dass eine Translationsbewegung eines im Polgehäuse drehbar angeordneten Ankers, was zu einem Anschlagen des Ankers an seiner mindestens einen Lagerstelle und somit zu einer erhöhten Geräuschentwicklung führen würde, verhindert werden kann.

In besonders bevorzugter Ausführungsform der Gleichstrommaschine ist die Magnethaltevorrichtung am Innenumfang des Polgehäuses angeordnet. Die Magnete sind also über den Innenumfang in einem vorzugsweise gleichen Abstand zueinander angeordnet.

Besonders bevorzugt wird ein Ausführungsbeispiel der Gleichstrommaschine, bei der die Magnete von Permanentmagneten gebildet sind; die Gleichstrommaschine ist in diesem Fall ein permanenterregter Gleichstrommotor. Im Zusammenhang mit der Erfindung werden unter dem Begriff "Magnete" auch magnetisierbare Pole verstanden. Die Anzahl der Magnete beträgt vorzugsweise sechs. Es können ohne weiteres auch weniger als sechs Magnete, beispielsweise nur zwei Magnete, oder auch mehr als sechs Magnete vorgesehen sein.

In bevorzugter Ausführungsform ist die Magnethaltevorrichtung von einem ringförmigen Haltekäfig gebildet, an dem die Magnete angeordnet sind und der in geeigneter Weise im Innern des ringförmigen Polgehäuses -vorzugsweise lösbar- fixierbar ist. Das Polgehäuse und die Magnete werden vor dem Einbringen in das Polgehäuse zu einer Einheit zusammengefügt, so dass das eigentliche Positionieren und Befestigen der Magnete am beziehungsweise im Polgehäuse nur relativ wenig Zeit beansprucht.

Nach einer Weiterbildung der Erfindung ist vorgesehen, dass der Haltekäfig mit einem in axialer Richtung verlaufenden, durchgehenden Schlitz versehen ist. Aufgrund dieser Ausgestaltung kann der Haltekäfig überdrückt werden, was zu einer Verkleinerung seines Durchmesser führt. Dabei können die beiden freien Enden des Haltekäfigs einander gegebenenfalls überlappen. Der Haltekäfig kann dann einfacher in axialer Richtung in das Polgehäuse eingeführt werden, insbesondere dann, wenn der Innendurchmesser des Polgehäuses und der Außendurchmesser des nicht überdrückten Haltekäfigs in etwa gleich groß sind. Ferner ist es möglich, den Haltekäfig nach seinem Einbringen in das Polgehäuse aufzuweiten, wodurch sein Durchmesser vergrößert wird. Dabei entsteht eine Lücke zwischen den beiden freien Enden des Haltekäfigs.

Nach einer Weiterbildung ist vorgesehen, dass der Haltekäfig vorzugsweise einteilig und federelastisch ausgebildet ist. Wird der geschlitzte Haltekäfig -wie vorstehend beschrieben- überdrückt, so federt er bei Entlastung selbsttätig in seine Ausgangsstellung zurück. Aufgrund dieser Eigenschaften ist in einfacher Weise eine kraftschlüssige Fixierung des Haltekäfigs im Polgehäuse realisierbar, indem der Außendurchmesser des Haltekäfigs so auf den Innendurchmesser des Polgehäuses abgestimmt ist, dass nach dem selbsttätigen Auffedern des zum erleichterten Einführen in das Polgehäuse zuvor überdrückten Haltekäfigs dieser nach seiner Entlastung sich am Innendurchmesser des Polgehäuses, vorzugsweise flächig, anlegt. Die zur Ausbildung der Kraftschlussverbindung erzeugten Anpresskräfte des Haltekäfigs an das Polgehäuse sind vorzugsweise so hoch, dass der Haltekäfig auch bei im Betrieb der Gleichstrommaschine möglicherweise auftretenden Vibrationen oder bei einer Schüttelbeanspruchung fixiert bleibt und sich nicht in axialer Richtung relativ gegenüber dem Polgehäuse verschiebt. Sollte es trotz allem zu einem Verschieben des Haltekäfigs kommen, so verschieben sich alle Magnete gleichmäßig. Ein Verschieben des Haltekäfigs kann jedoch mit hoher Sicherheit ausgeschlossen werden, da die hierfür erforderliche Kraft deutlich höher ist als die Kraft die notwendig ist, um einen einzelnen Magneten zu verschieben. Wenn also an dem Haltekäfig beispielsweise sechs Magnete angeordnet sind, so ist die erforderliche Kraft, um den Haltekäfig mit den daran angeordneten sechs magnetisierten Magneten axial zu bewegen, in etwa sechs mal höher als die zum axialen Bewegen eines der Magnete notwendige Kraft. So hohe Kräfte treten im normalen Betrieb der Gleichstrommaschine jedoch nicht auf.

Selbstverständlich können bei Bedarf außer der Kraftschlussverbindung auch weitere Mittel zur Sicherung des Haltekäfigs im Polgehäuse gegen ein axiales Verschieben vorgesehen werden. Zum Beispiel kann der Haltekäfig mittels einer Klips- beziehungsweise Klipsrastverbindung am Polgehäuse gegen ein Verschieben in axialer Richtung zusätzlich gesichert werden.

Alternativ oder gegebenenfalls zusätzlich zur Kraftschlussverbindung kann das Polgehäuse auch stoffschlüssig mit dem Polgehäuse verbunden werden, also beispielsweise verschweißt oder verklebt.

Um eine Kraftschlussverbindung zwischen Haltekäfig und Polgehäuse zu realisieren, bestehen noch weitere Möglichkeiten, von denen eine weitere im Folgenden beschrieben wird. Der ringförmige Haltekäfig kann beispielsweise in das Polgehäuse eingepresst werden. Hierzu muss er nicht, beispielsweise wie eine Spannhülse, geschlitzt sein, wie vorstehend beschrieben. In diesem Fall ist der Außendurchmesser des Haltekäfigs zumindest gleich groß wie oder größer als der Innendurchmesser des Polgehäuses.

Bevorzugt wird auch ein Ausführungsbeispiel der Gleichstrommaschine, bei dem der Haltekäfig aus einer Platine herausgearbeitet, vorzugsweise gestanzt, und anschließend durch Rollen in seine Ringform gebracht wird. Dies ermöglicht insbesondere eine kostengünstige Herstellung der Ausführungsform des Haltekäfigs, bei der der Haltekäfig - ähnlich wie eine Spannhülse- geschlitzt ist, um eine Kraftschlussverbindung zwischen Haltekäfig und Polgehäuse mit Hilfe von durch Überdrücken mit anschließender Entlastung des gerollten Haltekäfigs erzeugten Rückstellkräften zu realisieren.

Weiterhin wird ein Ausführungsbeispiel der Gleichstrommaschine bevorzugt, das sich dadurch auszeichnet, dass der Haltekäfig Taschen zur Aufnahme jeweils eines Magneten aufweist. Dadurch ist eine exakte Ausrichtung der Magnete in axialer Richtung, also in Richtung der Längsmittelachse des Haltekäfigs zueinander möglich. Mittels der Taschen ist auch der radiale Abstand der Magnete von der Längsmittelachse des Polgehäuses exakt definierbar. Die Magnete sind in den Taschen sicher gehalten, so dass sie sich nicht in axialer Richtung zueinander verschieben können. Bei einer vorteilhaften Ausführungsvariante ist vorgesehen, dass die Taschen von jeweils einer, den Mantel des Haltekäfigs durchdringenden Öffnung gebildet sind, wobei Mittel vorgesehen sind, die ein Durchfallen der Magnete durch die Öffnungen verhindern. Diese am Haltekäfig und/oder an den Magneten vorgesehenen Mittel können beispielsweise durch eine entsprechende Formgebung der Magnete gebildet sein.

In bevorzugter Ausführungsform der Gleichstrommaschine sind Mittel zum lösbaren Halten der Magnete in den Taschen vorgesehen. Diese können beispielsweise von einer Klipsverbindung gebildet sein. Um die Magnete am Haltekäfig zu befestigen, müssen diese lediglich in die Taschen rastend eingedrückt werden.

Besonders bevorzugt wird ein Ausführungsbeispiel der Gleichstrommaschine, die sich dadurch auszeichnet, dass vorzugsweise jedem Magneten jeweils mindestens ein Flussleitstück zugeordnet ist, die am Haltekäfig -vorzugsweise lösbar- befestigt sind. Hierzu weist der Haltekäfig jeweils eine Aufnahme für die Flussleitstücke auf, die vorzugsweise von der den zugeordneten Magneten aufnehmenden Tasche gebildet ist. Die Flussleitstücke werden vorzugsweise mittels einer Form-/Kraftschlussverbindung in der jeweiligen Aufnahme beziehungsweise der Tasche gehalten.

Flussleitstücke kommen beispielsweise dann zum Einsatz, wenn die Gleichstrommaschine als Startermotor, insbesondere für einen Verbrennungsmotor eingesetzt wird, wobei zu Beginn des Startvorgangs ein hohes Drehmoment erforderlich ist und nachfolgend eine ausreichende Hochlaufunterstützung durch den Startermotor für den Verbrennungsmotor gewünscht wird.

Damit die Magnete und die Flussleitstücke nach dem Magnetisieren beziehungsweise im Falle der Verwendung der Gleichstrommaschine als Motor während des Durchdrehens des Motors nicht radial nach innen in Richtung der Längsmittelachse des Polgehäuses gezogen werden, weisen die Magnete und/oder die Flussleitstücke einen trapezförmigen Querschnitt auf. Dadurch wird bei auf die Magnete und die Flussleitstücke radial nach innen wirkenden Kräften diese Teile in der sie aufnehmenden Tasche beziehungsweise Aufnahme verkeilt.

Vorteilhafte Ausführungsbeispiel der Gleichstrommaschine ergeben sich aus Kombinationen der in den Unteransprüchen hervorgehenden Merkmale.

Die Erfindung betrifft auch ein Verfahren mit den Merkmalen des Anspruchs 18. Es sieht zum Zwecke des Befestigens von Magneten an einem ringförmigen Polgehäuses einer Gleichstrommaschine vor, dass in einem ersten Schritt die Magnete, insbesondere Permanentmagnete, und gegebenenfalls Flussleitstücke an dem ringförmigen, geschlitzten sowie federelastischen Haltekäfig befestigt werden. In einem zweiten Schritt wird der Haltekäfig in Umfangsrichtung überdrückt, so dass dessen Außenmaß verringert wird. In einem dritten Schritt wird der in seiner überdrückten Form gehaltene Haltekäfig in axialer Richtung in das Polgehäuse eingeführt und im Innern des Polgehäuses an einer gewünschte Stelle positioniert. In einem vierten Schritt wird nun der in seiner überdrückten Stellung bisher zusammengehaltene Haltekäfig entlastet, wodurch dieser aufgrund seiner federelastischen Eigenschaften auffedert und sich vorzugsweise flächig, zumindest aber partiell an den Innenumfang des Polgehäuses anlegt, wobei der Haltekäfig durch die materialbedingten Federrückstellkräfte kraftschlüssig mit dem Polgehäuse verbunden wird. Das Verfahren ermöglicht in einfacher Weise eine schnell durchführbare, exakte Positionierung und Befestigung der Magnete am beziehungsweise im Haltekäfig.

Die Erfindung betrifft weiterhin die Verwendung einer Gleichstrommaschine nach einem der Ansprüche 1 bis 17 als Starter für eine Verbrennungskraftmaschine, insbesondere eines Fahrzeugs.

Die Erfindung betrifft ferner eine Magnethaltevorrichtung mit einem oder mehreren der aus den Ansprüchen 1 bis 17 hervorgehenden Merkmalen.

### Zeichnungen

Die Erfindung wird nachfolgend anhand der zugehörigen Zeichnungen noch näher erläutert. Es zeigen:
- Figur 1A: eine perspektivische Darstellung eines Ausführungsbeispiels einer Magnethaltevorrichtung;
- Figur 1B: einen Ausschnitt der in Figur 1 dargestellten Magnethaltevorrichtung in Vorderansicht;
- Figur 2A: eine Vorderansicht eines zweiten Ausführungsbeispiel der Magnethaltevorrichtung mit daran angebrachten Magneten;
- Figur 2B: eine perspektivische Darstellung der Magnethaltevorrichtung gemäß Figur 2A;
- Figur 3A: eine Vorderansicht der Magnethaltevorrichtung gemäß den Figuren 1A und 1B mit daran angebrachten Magneten und Flussleitstücken;
- Figur 3B: eine perspektivische Darstellung der Magnethaltevorrichtung gemäß Figur 3A;
- Figur 4: ein Polgehäuse für eine Gleichstrommaschine mit teilweise eingeschobener Magnethaltevorrichtung in perspektivischer Darstellung; und
- Figur 5: das in Figur 4 dargestellte Polgehäuse mit vollständig darin eingebrachter und fixierter Magnethaltevorrichtung, in perspektivischer Darstellung.

### Beschreibung der Ausführungsbeispiele

Im Folgenden werden anhand der Figuren mehrere Ausführungsbeispiele einer Magnethaltevorrichtung 1 für eine Gleichstrommaschine näher erläutert. Es wird davon ausgegangen, dass die Gleichstrommaschine ein fremderregter, insbesondere permanenterregter Gleichstrommotor ist. Die Erfindung ist jedoch nicht auf die Verwendung der Magnethaltevorrichtung für Gleichstrommotoren beschränkt, sondern kann auch ohne weiteres im Zusammenhang mit Gleichstromgeneratoren eingesetzt werden.

In Figur 1A ist ein Ausführungsbeispiel der Magnethaltevorrichtung 1 für einen nicht näher dargestellten Gleichstrommotor gezeigt. Die Magnethaltevorrichtung 1 ist von einem ringförmigen Haltekäfig 3 gebildet, der im Querschnitt gesehen eine kreisrunde Außenkontur aufweist. Der Haltekäfig 3 dient zur Aufnahme von hier insgesamt sechs Permanentmagneten, die in Figur 1A nicht gezeigt sind. Der Haltekäfig 3 ist einteilig ausgebildet und ist vorzugsweise aus einer relativ dünnen Platine herausgearbeitet, was beispielsweise ausschließlich durch Stanzen möglich ist. Anschließend wird der ebene, eine rechteckförmige Kontur aufweisende Haltekäfig 3 gerollt, wodurch er seine Ringform erhält. Die beiden freien Endbereiche 5 und 7 des Haltekäfigs 3 sind nicht fest miteinander verbunden, so daß der Mantel des Haltekäfigs 3 quasi mit einem in axialer, also in Richtung seiner Längsmittelache 9 verlaufenden Schlitz 11 versehen ist. Das Material des Haltekäfigs und dessen Wanddicke ist so gewählt, dass der Haltekäfig 3 federelastische Eigenschaften aufweist, so dass er nach dem Rollen in seine Ringform dazu neigt, wieder aufzufedern. Die dabei entstehenden Federrückstellkräfte werden zur Ausbildung einer Kraftschlussverbindung zwischen dem Haltekäfig 3 und einem Polgehäuse benutzt, worauf im Folgenden noch näher eingegangen wird.

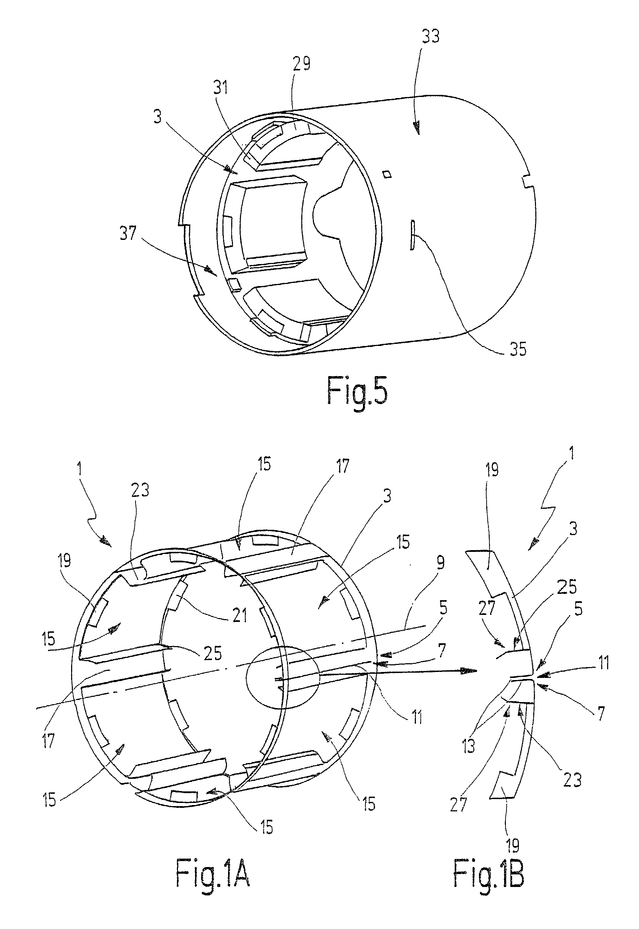

Wie insbesondere in Figur 1B ersichtlich, die einen Ausschnitt des Haltekäfigs 3 im Bereich des Schlitzes 11 zeigt, sind die Endbereiche 5, 7 abgekantet, wodurch radial nach innen stehende, parallel zueinander verlaufende Wandabschnitte 13 gebildet sind, an denen eine geeignete, nicht dargestellten Halteeinrichtung angesetzt werden kann, um den gerollten Haltekäfig 3 daran zu hindern, sich wieder zumindest teilweise zu "entrollen", also aufzufedern. Bei diesem Ausführungsbeispiel ist der Haltekäfig 3 schon bei zusammengehaltenen Endbereichen 5, 7 überdrückt, so dass er bereits schon beim Loslassen der Endbereiche 5, 7 soweit auffedert, dass er sich an seinem Außenumfang an den Innenumfang eines ringförmigen Polgehäuses des Gleichstrommotors anlegt beziehungsweise andrückt, wodurch eine kraftschlüssige Verbindung zwischen diesen Teilen gebildet wird. Bei einem anderen, nicht dargestellten Ausführungsbeispiel sind die Endbereiche 5, 7 des Haltekäfigs 3 so ausgebildet, dass sie sich im überdrücktem Zustand einander überlappen, wobei der Haltekäfig 3 im eingebauten Zustand soweit auffedert, dass die Endbereiche mit geringem Abstand einander gegenüberliegen.

Der in den Figuren 1A und 1B gezeigte Haltekäfig 3 weist insgesamt sechs Taschen 15 auf, die jeweils zur Aufnahme eines Permanentmagneten dienen. Die Taschen 15 sind über den Umfang des Haltekäfigs 3 in einer 60°-Teilung angeordnet, weisen also gleiche Abstände voneinander auf. Die Taschen 15 sind als rechteckförmige, entsprechend der Ringform des Haltekäfig 3 in Umfangsrichtung desselben gekrümmte Durchgangsöffnungen ausgebildet. Zwischen jeweils zwei benachbarten Taschen 15 befindet sich ein durchgehender Steg 17, die hier keine Öffnungen oder dergleichen aufweisen und dem Haltekäfig 3 eine entsprechende Stabilität verleihen. An jeder der vier Seiten der Taschen 15 ist jeweils ein in radialer Richtung nach innen gebogener Wandabschnitt (Lasche) 19, 21, 23 beziehungsweise 25 angeordnet, die jeweils mit einer Kröpfung 27 versehen sind, wie insbesondere in Figur 1B ersichtlich. Die Wandabschnitte 23, 25 erstrecken sich über die gesamte Länge des jeweiligen Randes der Tasche 15, während die Wandabschnitte 19, 21 sich jeweils nur über eine Teillänge des zugeordneten Taschenrandes erstrecken. Die Wandabschnitte 19, 21, 23, 25 dienen zur Aufnahme und Positionierung, um den Permanentmagneten in der Tasche 15 sicher zu halten. Zu diesem Zweck sind die Wandabschnitte 19, 21, 23, 25 in ihrem zwischen der Kröpfung 27 und dem Rand der Tasche 15, von dem sie entspringen, liegenden Bereich leicht schräg nach innen in die Tasche 15 eingebogen, verlaufen also nicht exakt radial zur Längsmittelachse 9. Zur Befestigung der Permanentmagnete am Haltekäfig 3 beziehungsweise in den Taschen 15 werden diese den Taschen 15 radial zugeführt und eingedrückt. Beim Eindrücken der Permanentmagnete werden die federelastischen Wandabschnitte 19, 21, 23, 25 nach außen gebogen und halten den Permanentmagneten klemmend in der Tasche 15.

Aufgrund der einteiligen Ausführung des Haltekäfigs 3 ist eine exakte Positionierung der Permanentmagnete in axialer Richtung zueinander möglich. Dadurch ist die magnetische Mitte exakt definiert.

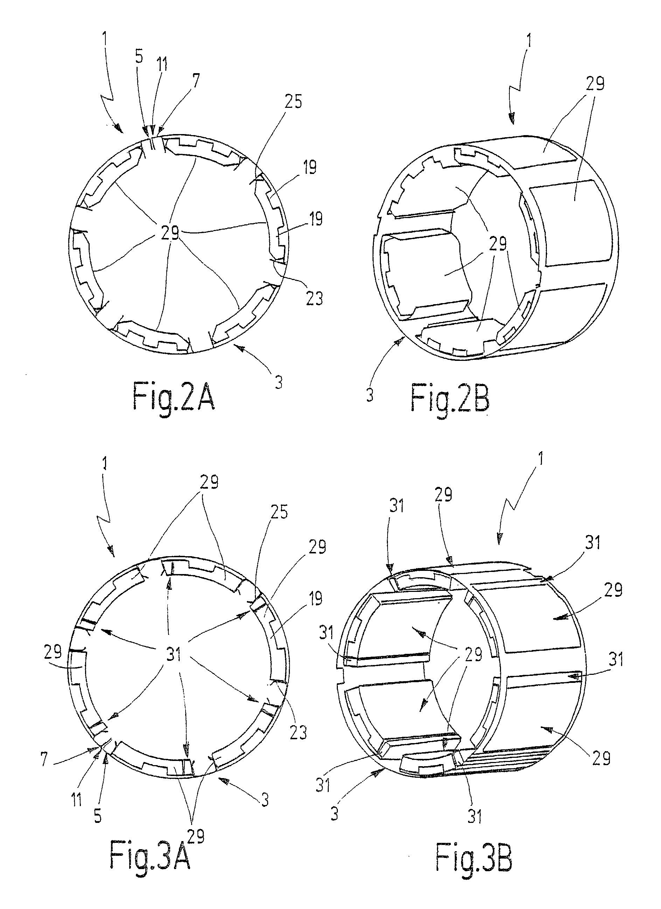

Figuren 2A und 2B zeigen verschiedene Ansichten eines weiteren Ausführungsbeispiels des Haltekäfigs 3. Gleiche Teile sind mit gleichen Bezugszeichen versehen, so dass auf die Beschreibung zu den vorangegangenen Figuren verwiesen wird. Der Haltekäfig 3 unterscheidet sich von dem in den Figuren 1A und 1B gezeigten Haltekäfig 3 lediglich dadurch, dass an den in Umfangsrichtung des Rings verlaufenden Seiten der Taschen jeweils zwei voneinander beabstandete Wandabschnitte 19 beziehungsweise 21 vorgesehen sind, von denen jedoch nur die Wandabschnitte 19 erkennbar sind. In jeder der Taschen 15 ist ein Permanentmagnet 29 mittels der durch die Wandabschnitte 19, 21, 23, 25 gebildeten Form-/Kraftschlussverbindung gehalten. Die Permanentmagnete 29 sind auf ihrer Außenseite so geformt und derart in den Taschen 15 angeordnet, dass der Haltekäfig 3 an seinem Außenumfang praktisch keine Vorsprünge oder Vertiefungen aufweist. Auch die Innenfläche der Permanentmagnete 29 ist gekrümmt, derart, dass sie im eingebauten Zustand parallel zu einer gedachten Kreislinie mit dem Mittelpunkt auf der Längsmittelachse 9 mit gleichmäßigen Abstand verlaufen.

Figuren 3A und 3B zeigen verschieden Ansichten des anhand der Figuren 1A und 1B beschriebenen Haltekäfigs 3 mit daran angeordneten Permanentmagneten 29 und Flussleitstücken 31. Der Aufbau und die Funktion der im Zusammenhang mit einem Gleichstrommotor verwendeten Flussleitstücke ist bekannt, so dass hier nicht näher darauf eingegangen wird. In jeder der Taschen 15 des Haltekäfigs 3 befindet sich jeweils ein Permanentmagnet 29 und ein Flussleitstück 31, die -wie vorstehend beschrieben- durch die Wandabschnitte 19, 21, 23, 25 in der Tasche 15 klemmend gehalten sind. Die in einer Tasche 15 angeordneten Teile, also der Permanentmagnet 29 und das Flussleitstück 31 werden also durch Form-/Kraftschluss in dem Freiraum zwischen den Wandabschnitten 19, 21, 23, 25 durch dieselben gehalten. Es kommt zu einem Verkeilen der Teile durch die Vorspannung der Wandabschnitte 19, 21, 23, 25.

Die einen trapezförmigen Querschnitt aufweisenden Flussleitstücke 31 sind hier zwischen dem Wandabschnitt 25 und dem Permanentmagnet 29 angeordnet. Im montierten Zustand werden der Permanentmagnet 29 und das Flussleitstück 31 von den Wandabschnitten 19, 21, 23, 25 klemmend in der Tasche 15 gehalten. Eine weitere Verbindung zwischen Permanentmagnet und Flussleitstück ist hier nicht vorgesehen. Die Trapezform der Flussleitstücke 31 verhindert bei einem Durchdrehen des Gleichstrommotors, dass die Flussleitstücke radial nach innen gezogen werden. Alternativ oder zusätzlich können auch die Permanentmagnete eine entsprechende Form aufweisen, die sicherstellt, dass die zusammen in der Tasche angeordneten Teile sich gegeneinander verklemmen.

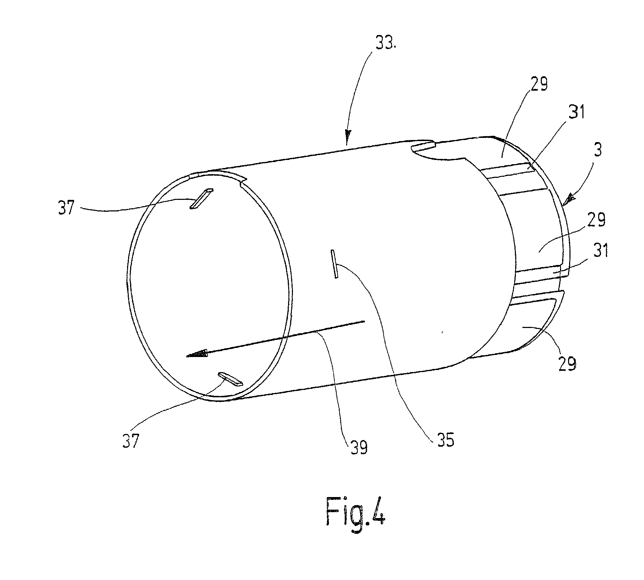

Figur 4 zeigt ein Ausführungsbeispiel eines Polgehäuses 33 für den Gleichstrommotor. Das Polgehäuse 33 ist ringförmig ausgebildet und weist auf seinem Außenumfang eingebrachte Eindrückungen 35 auf, die in einer 120°-Teilung angeordnet sind. Durch die Eindrückungen 35 sind am Innenumfang des Polgehäuses 33 Erhebungen 37 gebildet, die zum Sichern des in Richtung eines Pfeils 39 in axialer Richtung in das Polgehäuse 33 einbringbaren Haltekäfigs 3 gegen eine Verdrehen desselben in Umfangsrichtung und Verschieben in Richtung der Längsmittelachse des Polgehäuses 33 dienen. Der Haltekäfig 3, der hier dem anhand der Figuren 3A und 3B beschrieben entspricht und neben den Permanentmagneten 29 auch Flussleitstücke 31 aufweist, ist im teilweise in das Polgehäuse 33 eingeschobenen Zustand dargestellt.

In Figur 5 ist der Haltekäfig 3 in seiner dafür vorbestimmten Position innerhalb des Polgehäuses 33 angeordnet und ausschließlich durch Kraftschluss mit dem Polgehäuse 33 verbunden. Dadurch, dass die Permanentmagnete und die Flussleitstücke mit dem Haltekäfig 3 bereits in einem vorhergehenden Arbeitsgang zu einer Einheit miteinander verbunden sind, ist deren Anbringung am Polgehäuse 33 in kurzer Zeit möglich.

Im Folgenden wird das erfindungsgemäße Verfahren zum Befestigen der Permanentmagnete 29 und der Flussleitstücke 31 am Polgehäuse 33 näher erläutert: Zunächst werden die Permanentmagnete 29 und -sofern vorgesehen- auch die Flussleitstücke 31 am Haltekäfig 3 befestigt, was beispielsweise wie anhand der Figuren beschrieben erfolgen kann. Dann wird der geschlitzte, federelastische Haltekäfig 3 soweit überdrückt, dass sein Außenmaß kleiner ist als der Innendurchmesser des Polgehäuses 33. Dann wird der Haltekäfig 3 in axialer Richtung in das Polgehäuse 33 eingeführt und an einer gewünschten Stelle positioniert. Schließlich wird der Haltekäfig 3 entlastet, so dass er auffedern kann. Dabei legt er sich an den Innenumfang des Polgehäuses 33 an und wird durch die durch das Überdrücken erzeugten Federrückstellkräfte am Polgehäuse 33 sicher gehalten. Vorzugsweise ist die Kraftschlussverbindung zwischen Haltekäfig und Polgehäuse ausreichend, um den Haltekäfig 3 gegen ein Verschieben in axialer Richtung zu sichern, ohne dass hierzu weitere Sicherungsmittel vorgesehen werden müssen.

Der anhand der Figuren 3A und 3B beschriebene Haltekäfig 3 mit den daran angebrachten Permanentmagneten 29 und Flussleitstücken 31 kann in unveränderter Form sowohl bei links- als auch bei rechtsdrehenden Gleichstrommotoren eingesetzt werden. Hierzu muss er nur mit seiner entsprechenden Stirnseite zuerst in das Polgehäuse 33 eingeführt werden, um eine gewünschte, drehrichtungsabhängige Anordnung der Flussleitstücke 31 zu realisieren. In Figur 5 sind die Flussleitstücke 31 für den Linkslauf angeordnet. Wäre der Haltekäfig 3 mit seiner anderen Stirnseite zuerst in das Polgehäuse 33 eingeschoben worden, so wären die Flussleitstücke 31 entsprechend für den Rechtslauf angeordnet. Auch das in den Figuren 2A und 2B gezeigten Ausführungsbeispiel kann sowohl für links- als auch für rechtsdrehende Gleichstrommotoren eingesetzt werden.

## Patentansprüche

1. Gleichstrommaschine mit einem ringförmigen Polgehäuse (33), an dem mehrere Magnete (29) befestigt sind, **gekennzeichnet durch** eine am Polgehäuse (33) befestigbare Magnethaltevorrichtung (1), an der die Magnete (29), insbesondere Permanentmagnete, gehalten sind.

2. Gleichstrommaschine nach Anspruch 1, **dadurch gekennzeichnet, dass** die Magnethaltevorrichtung (1) am Innenumfang des Polgehäuses (33) befestigt ist.

3. Gleichstrommaschine nach einem der vorhergehenden Ansprüche, **dadurch gekennzeichnet, dass** die Magnethaltevorrichtung (1) von einem ringförmigen Haltekäfig (3) gebildet ist.

4. Gleichstrommaschine nach einem der vorhergehenden Ansprüche, **dadurch gekennzeichnet, dass** der Haltekäfig (3) mit einem in axialer Richtung verlaufenden, durchgehenden Schlitz (11) versehen ist.

5. Gleichstrommaschine nach einem der vorhergehenden Ansprüche, **dadurch gekennzeichnet, dass** der Haltekäfig (3) federelastisch und vorzugsweise einteilig ausgebildet ist.

6. Gleichstrommaschine nach einem der vorhergehenden Ansprüche, **dadurch gekennzeichnet, dass** der Haltekäfig (3) aus einer Platine herausgearbeitet, vorzugsweise gestanzt, und anschließend durch Rollen in seine Ringform gebracht ist.

7. Gleichstrommaschine nach einem der vorhergehenden Ansprüche, **dadurch gekennzeichnet, dass** der Haltekäfig (3) kraftschlüssig im Polgehäuse (33) gehalten ist.

8. Gleichstrommaschine nach einem der vorhergehenden Ansprüche, **dadurch gekennzeichnet, dass** die Kraftschlussverbindung aufgrund von materialbedingten Rückstellkräften des in seine Ringform gerollten Haltekäfigs (3) gebildet ist, die gegebenenfalls durch Überdrücken des gerollten Haltekäfigs (3) noch vergrößerbar sind.

9. Gleichstrommaschine nach einem der vorhergehenden Ansprüche, **dadurch gekennzeichnet, dass** der Haltekäfig (3) Taschen (15) zur Aufnahme jeweils eines Magneten (29) aufweist.

10. Gleichstrommaschine nach einem der vorhergehenden Ansprüche, **gekennzeichnet durch** Mittel zum lösbaren Halten der Magnete (29) in den Taschen (15).

11. Gleichstrommaschine nach Anspruch 10, **dadurch gekennzeichnet, dass** die Mittel von einer Form-/Kraftschlussverbindung gebildet sind.

12. Gleichstrommaschine nach einem der vorhergehenden Ansprüche, **dadurch gekennzeichnet, dass** vorzugsweise jedem Magneten (29) jeweils mindestens ein Flussleitstück (31) zugeordnet ist, die am Haltekäfig (3) -vorzugsweise lösbar- befestigt sind.

13. Gleichstrommaschine nach einem der vorhergehenden Ansprüche, **dadurch gekennzeichnet, dass** die Flussleitstücke (31) jeweils in einer Aufnahme am Haltekäfig (3) angeordnet sind.

14. Gleichstrommaschine nach Anspruch 13, **dadurch gekennzeichnet, dass** die jeweilige Aufnahme von einer, einen Magneten (29) aufnehmenden Tasche (15) gebildet ist.

15. Gleichstrommaschine nach einem der vorhergehenden Ansprüche, **dadurch gekennzeichnet, dass** die Flussleitstücke (31) mittels einer Form-/Kraftschlussverbindung in der jeweiligen Aufnahme gehalten sind.

16. Gleichstrommaschine nach einem der vorhergehenden Ansprüche, **dadurch gekennzeichnet, dass** die Magnete (29) und/oder die Flussleitstücke (31) einen trapezförmigen Querschnitt aufweisen.

17. Gleichstrommaschine nach einem der vorhergehenden Ansprüche, **gekennzeichnet durch** Mittel zum Sichern des Haltekäfigs (3) im Polgehäuse (33) gegen eine Verdrehen in Umfangsrichrung und/oder in axialer Richtung.

18. Verfahren zum Befestigen von Magneten (29), insbesondere Permanentmagneten, an einem ringförmigen Polgehäuse (33) einer Gleichstrommaschine, insbesondere nach einem der Ansprüche 1 bis 17, mit folgenden Schritten:
- Befestigen der Magnete (29) an einem ringförmigen, geschlitzten sowie federelastischen Haltekäfig (3),
- Überdrücken des Haltekäfigs (3) in Umfangsrichtung,
- Einführen des Haltekäfigs (3) in axialer Richtung in das Polgehäuse (33),
- Positionieren des Haltekäfigs (3) im Innern des Polgehäuses (33), und
- Entlasten des überdrückten Haltekäfigs (3), wodurch dieser auffedert und dadurch kraftschlüssig mit dem Polgehäuse (33) verbunden wird.

19. Verfahren nach Anspruch 18, **dadurch gekennzeichnet, dass** an dem Haltekäfig (3) auch Flussleitstücke (31) befestigt werden, vorzugsweise bevor der Haltekäfig (3) in das Polgehäuse (33) eingeführt und daran befestigt wird.

20. Verwendung einer Gleichstrommaschine nach einem der Ansprüche 1 bis 17 als Starter für eine Verbrennungskraftmaschine, insbesondere eines Fahrzeugs.

21. Magnethaltevorrichtung (1) nach einem oder mehreren der vorhergehenden Ansprüche 1 bis 17 für eine Gleichstrommaschine.
